# EUROPEAN PATENT SPECIFICATION

(11) **EP 4 310 462 B1**
(45) Date of publication and mention of the grant of the patent: **07.05.2025**
(21) Application number: 23165183.7
(22) Date of filing: 29.03.2023
(51) Int. Cl.: G01F 11/02, G01F 11/08

(54) **DOSING DEVICE FOR A FLUID**
DOSIERVORRICHTUNG FÜR EINE FLÜSSIGKEIT
DISPOSITIF DE DOSAGE POUR UN FLUIDE

(30) Priority: 29.03.2022 IT 202200006203
(43) Date of publication of application: 24.01.2024
(73) Proprietor: Guccini, Fabio, 40068 San Lazzaro di Savena (BO) (IT)
(72) Inventor: Guccini, Fabio, 40068 San Lazzaro di Savena (BO) (IT)
(74) Representative: Manzella & Associati

(56) References cited:
- WO-A1-2021/099971
- US-A- 2 526 331
- US-A- 3 858 771
- US-A- 4 863 066

## Description

### Technical field

The present invention relates to a measuring device for fluids, in particular intended for use in the pharmaceutical, cosmetic and food fields.

### Prior art

The need to accurately measure certain quantities of fluids to be inserted into special containers such as bottles, vials, ampoules and the like has long been known, in the pharmaceutical, cosmetic and food fields.

Various systems have therefore been developed for measuring fluids, which in specific uses can be chosen according to the chemical-physical characteristics of the fluid, the precision requirements of the measuring, the extent of the measuring volumes, the risk class of the measured fluids and the sterility requirements of the sector of use.

A first type is that of systems that use peristaltic pumps.

The peristaltic pumps generally comprise a flexible tube, in which the fluid is contained, arranged around a rotor member having a plurality of peripherally distributed pressing members, adapted to locally engage the tube, thus causing it to squeeze. The rotation of the pressing members determines the advance of said squeezing and therefore the feeding of a measured amount of fluid contained in the tube. An example of this type of measuring devices is described in European patent EP3408537.

A problem encountered in the use of peristaltic pumps is the risk that the tube collapses due to the continuous stresses by the pressure members, thus preventing the correct passage of the fluid and compromising the accuracy of the measurement. In addition, peristaltic pumps do not allow high prevalence, therefore they are not suitable for measuring particularly dense fluids.

A second type of known measuring devices uses piston volumetric pumps which, on the other hand, are suitable for measuring dense and viscous liquids. Such measuring devices comprise a piston member inserted into a chamber and reciprocated along an axis to draw in and dispense a defined volume of fluid. An example of this type of measuring devices is disclosed in European patent EP2395330.

A problem encountered in the use of this type of measuring device is the risk of scale, which can form especially when measuring products containing sugars or particularly dense pastes. Such encrustations may prevent the correct passage of the fluid through the dispensing duct, and may also affect the accurate measurement of the fluid.

A third type of known measuring devices is the so-called "time/pressure" measuring systems, based on the ratio of some variables such as for example the pressure impressed on the fluid and the opening time of the delivery valve present in the system. Such systems typically comprise an electronic control device for managing the time of opening of the dispensing valve and the measuring pressure.

"Time/pressure" systems may have problems in maintaining measuring accuracy and precision, due to the inertia of the checks involved.

Finally, there are flowmeter measuring systems, particularly suitable for measuring large volumes of fluid. Such systems generally consist of a pump that provides a fluid flow rate at a pressure regulated by an electronic control device. Also for this type of measuring systems the problem of the accuracy and precision of the measuring arises.

Furthermore, in known systems, in general, the problem of contact between fluid and mechanical parts arises. For example, in the presence of particular chemical-physical characteristics, such contact may cause damage to the mechanical parts hit by the fluid or pose a risk to the operator or the maintenance technician.

Application WO 2021/099971 discloses, as a further example of a solution, a valve system for dispensing a product in the form of an aerosol. Such system comprises a measuring container arranged inside a rigid container and provided with elastic means for exerting a compressive action on the same measuring container, so as to dispense a measured amount of fluid.

### Disclosure

The present invention aims at solving the mentioned problems by devising a fluid measuring device, capable of operating with high precision and accuracy.

It is a further object of the present invention to provide a versatile measuring device, suitable for measuring fluids with different chemical-physical characteristics.

Another object of the invention is to provide a measuring device that enables the measurement of fluids under optimal sterile conditions.

Another object of the invention is to provide a measuring device that enables the measurement of even dangerous fluids reducing the risk of damage to the mechanical components involved, as well as the risk of contamination of the environment in contact with the operator or the maintenance technician.

A still further object of the invention is to provide a measuring device for fluids of simple constructive and functional conception, which is certain in operation, versatile, as well as relatively inexpensive.

The foregoing objects are achieved, according to the present invention, by the measuring device of claim 1.

The measuring device according to the invention comprises a central body provided with a connection portion for the connection to at least one suction duct and to at least one duct for delivering the fluid, a gas or a liquid, and a containment portion defining an internal cavity for a clearance volume of fluid and comprising a plurality of openings for the passage of the fluid outside the same containment portion.

The measuring device further comprises a casing mounted externally to the containment portion so as to define between the same casing and the containment portion an external chamber adapted to contain a measuring volume of the fluid.

The measuring device then comprises an elastic body fitted externally to the containment portion and retained for an annular portion between the central body and the casing, the elastic body being expandable for the rest between a first rest configuration, in which the same elastic body adheres to the containment portion and a second expanded configuration, at which the elastic body is expanded until it occupies the measuring volume of the external chamber, by effect of a flow of fluid through said openings.

The casing of the measuring device usefully has a duct for feeding a contrast fluid upon expansion of the elastic body.

The duct is preferably made on a bottom of the casing.

The elastic body, preferably made of elastomer, acts as a separating and pumping element, sucking inside the volume made available by the external chamber and ejecting the measuring volume from it.

According to a feature of the invention, the provision of the external chamber, with the respective measuring volume, guarantees a precise cyclical and repetitive measurement.

Furthermore, it should be noted that the elastic body, fitted on the containment portion of the central body, also serves as a protection for the casing, in particular for the external chamber, as it shields from contact with the fluid to be measured. Therefore, the surrounding environment is safe and the cleaning and sterilization are extremely easy.

Another advantage of the measuring device according to the invention lies in the fact that the fluid is not subjected to heating by the pumping action of the elastic body. Therefore, the measuring device avoids the formation of undesired encrustations, possible for example in the presence of sugary fluids when heated.

The measuring device may also be easily adjusted. In fact, it is possible to adjust the insertion of the containment portion inside the outer chamber, or to adjust the positioning of the bottom of the casing, in case the latter is made as a separate element. This allows a very precise micro-adjustment of the measuring volume, defined by the external chamber.

According to an even autonomous aspect, applicable to measuring devices of different type, the containment portion can be advantageously divided into a suction section and a delivery section, such that the fluid to be measured cannot flow from one to the other directly. In practice, the above sections are separate.

Preferably, to achieve such separation, the suction section and the delivery section are separated by an intermediate section, inserted inside the inner chamber preferably by interposing sealing means.

The suction section is preferably provided with respective suction openings, adapted to allow the passage of the fluid to be dispensed from the inner chamber to the outside of the containment body following the expansion of the elastic body.

The delivery section is preferably provided with respective delivery openings, adapted to allow the return of the fluid to be delivered from the outside of the containment body to the internal chamber following the return of the elastic body to the rest configuration.

According to an aspect that may be also autonomous, also applicable to other types of measuring devices, a valve element can be provided, movable alternatively between an open configuration, at which it is distant from the suction openings, to allow the passage of fluid from the suction outside the containment portion, in a suction step, and a closed configuration, at which the valve element is approached to the suction openings, so as to obstruct them, to allow the passage of the fluid measuring volume sucked in and collected outside the containment portion, in a delivery step, through the delivery openings only.

The valve element may be made of elastic material, impermeable to the fluid to be measured.

The provision of the valve element is advantageous in the transitional, opening and closing steps of the shut-off devices present in the supply and dispensation circuits of the fluid to be measured.

According to an aspect that may be also autonomous, applicable as well to other types of measuring devices, a filtering element can be provided, to precisely regulate the flow rate of the fluid to be measured. In this way the measuring device can be easily adjusted.

The filter element can be arranged at delivery openings made at the delivery section.

The filter element is preferably made of a tubular band of mesh material.

According to an advantageous aspect, applicable as well to measuring devices of another type, the elastic body can be made of a tubular element, having an end closed by a joint.

The joint can be easily made of a welded end edge.

The elastic body can be assembled inside the casing, so as to be retained on an outer wall of the containment portion, as well as at said annular portion, also at a second annular portion, so as to segregate the expansion of the elastic body between the annular portion and the second annular portion, to define the measuring volume.

The elastic body can be advantageously inserted inside said duct for feeding said contrast fluid, thus being retained by a respective internal wall in an expansion phase.

The duct is preferably provided with internal grooving to allow inflow and/or outflow of the contrast fluid to the external chamber and/or therefrom.

The measuring device may therefore also be easily adjusted. In fact, for this purpose it is possible to regulate the inflow and/or outflow of contrast fluid, air and/or nitrogen for example, to the external chamber. This feature allows a very precise micro-adjustment of the flow rate of the measuring fluid, thanks to the controlled expansion of the elastic body.

Finally, the combined action of the contrast fluid and the filter element allows a very precise adjustment of the flow rate of the measuring fluid.

Finally, it is provided that the measuring device may be used in a "disposable" manner, for example by making the casing of plastic and packaging the same measuring device in a kit further comprising the flexible tubing connecting to a measuring machine and to a respective containment tank of the fluid to be measured. The kit may usefully be supplied inside a sterile package.

### Brief description of drawings

The details of the invention will become more apparent from the detailed description of a preferred embodiment of the fluid measuring device according to the invention, illustrated as a non limitative example in the accompanying drawings, in which:

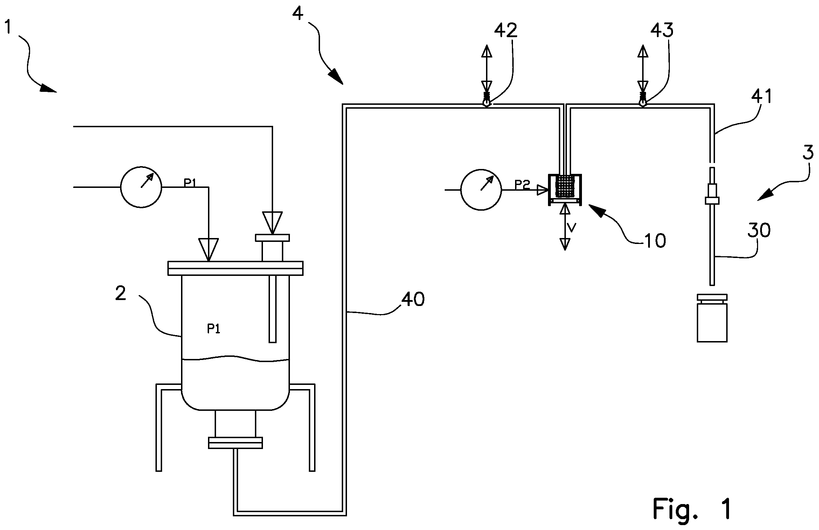

Figure 1 is a schematic view of a measuring system using the fluid measuring device according to the invention;
Figure 2 is a front view of the measuring device;
Figure 3 is a top plan view of the same measuring device;
Figures 4 and 5 are respectively a perspective sectional view according to a median axial plane and a side sectional view according to the same plane of the measuring device;
Figures 6 and 7 are respectively a perspective sectional view according to a median axial plane and a side sectional view according to the same plane of the measuring device in a second embodiment;
Figure 8 is a schematic view of a different measuring system using the fluid measuring device according to the embodiment illustrated in Figures 6 and 7;
Figure 9 is a side view of a third embodiment of the measuring device;
Figures 10a, 10b and 11a, 11b are respectively a sectional view and a relative enlarged detail according to the plane X-X indicated in Figure 9, of the measuring device according to the invention in a delivery step and in a suction step;
Figures 12 and 13 respectively show a perspective view in section according to an axial median plane and a relative enlarged detail of the device illustrated in Figure 9, in a suction operative step.

### Description of embodiments of the invention

With particular reference to these figures, an apparatus for measuring fluids, gases or liquids, is indicated as a whole with the reference 1, which employs the measuring device 10 according to the invention. The fluids to be measured may in particular be intended for use in the pharmaceutical sector, but also in other industrial sectors, for example in the food and cosmetic sector.

The apparatus 1 comprises a tank 2 for containing the fluid to be measured, gas or liquid, the measuring device 10, a dispensing unit 3, and a measuring circuit 4, configured to connect the tank 2 to the dispensing unit 3 through the measuring device 10.

The storage tank 2 is adapted to contain the fluid to be measured at a first pressure value P₁. The first pressure value P₁ can be maintained within the tank 2 by controlled injection of an inert gas, preferably nitrogen. The fluid is also preferably maintained at a certain level of filling of the tank 2, for example by employing means for controlling the supply of fluid to the tank 2.

The dispensing unit 3 may comprise at least one dispensing nozzle 30 or an equivalent means, which allows the dispensing of measured quantities of fluid, in order to fill correspondingly respective containment units, for example in the form of bottles, vials, ampoules or the like.

Preferably the dispensing unit 3 comprises a plurality of dispensing nozzles 30, so as to feed simultaneously or according to a certain sequence a plurality of containment units, for the benefit of the productivity of the system in which the measuring apparatus 1 is inserted.

The measuring circuit 4 comprises at least one suction duct 40 connecting the tank 2 to the measuring device 10 and at least one delivery duct 41 connecting the measuring device 10 to the dispensing unit 3. The suction duct 40 and the delivery duct 41 are preferably of a flexible type, for example of silicone material, suitable for use, among others, in both the food and pharmaceutical sectors.

The apparatus 1 further comprises a first shut-off device 42 arranged on the suction duct 40 and a second shut-off device 43 arranged on the delivery duct 41. The first shut-off device 42 and/or the second shut-off device 43, which are adapted to adjust the opening of the ducts on which they are installed, are preferably made by means of a crush valve of known type.

The measuring device 10 is adapted to supply the dispensing unit 3 through the delivery duct 41 with a dosing volume V_{DOS} of fluid, sucking it through the suction duct 40.

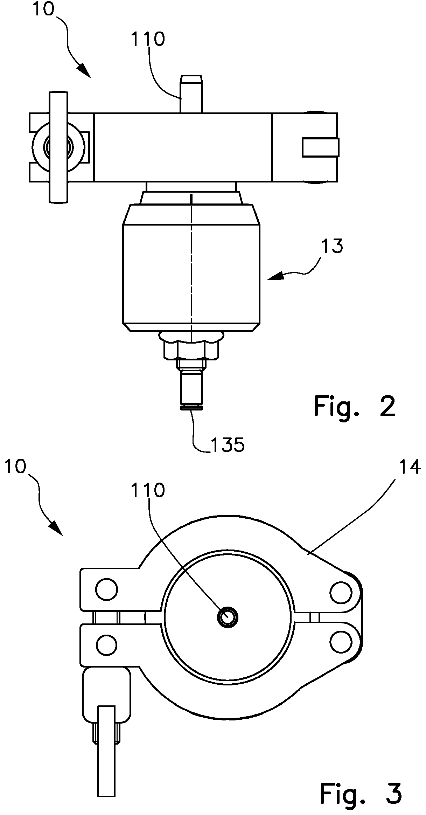

The measuring device 10 comprises a central body 11, an elastic body 12 and a casing 13 (see Figures 2 to 5), preferably developed along a longitudinal axis A.

The central body 11 is made of a material suitable for contact with the fluid to be measured, for example metal, preferably stainless steel. Furthermore, the central body 11 is made of a material not deformable under the conditions of use for measuring the fluid of interest, for example of a rigid material.

The central body 11 has a connecting portion 11a, a fluid containing portion 11b and a locking portion 11c.

The connection portion 11a comprises at least one tubular coupling 110 for the passage of the incoming and/or outgoing fluid. More precisely, the connection portion 11a allows connection to the measuring circuit 4, in particular to the suction duct 40 and to the delivery duct 41, for example through suitable connection means.

**In** the case shown for example in Figures 2 to 5, the connecting portion 11a comprises a single coupling 110, useful both for entry and for exit of the fluid, preferably along the aforementioned longitudinal axis A. The connection means can therefore provide a fitting, that is a single tubular connection that leads to a bifurcation, shaped like a Y, for connection to both the suction duct 40 and the delivery duct 41. This fitting may possibly be made integrated with the suction and delivery ducts 40, 41. Alternatively, it is possible to provide that the connecting portion 11a shapes at least a pair of couplings 110, for example a first coupling for the injection of fluid and a second coupling preferably flanked to the first, for the exit of the same fluid. In this case, the suction duct 40 and the delivery duct 41 can also be directly connected to the aforementioned couplings.

The containment portion 11b encloses an internal containment chamber 5 which, in use, is in communication with the measurement circuit 4 through the coupling 110 of the connection portion 11a. Said internal chamber 5 defines a containment volume V_{N} which represents in operation a "clearance volume".

The containment portion 11b is preferably made of a tubular cartridge 111, for example cylindrically shaped, comprising a plurality of openings 112, preferably evenly distributed on the side wall around the longitudinal axis A.

The openings 112 can be made by respective perforations, for example of circular shape. Alternatively, the cartridge 111 can be made of a suitably shaped mesh around the longitudinal axis A, such that said openings 112 are defined between respective strands of the mesh.

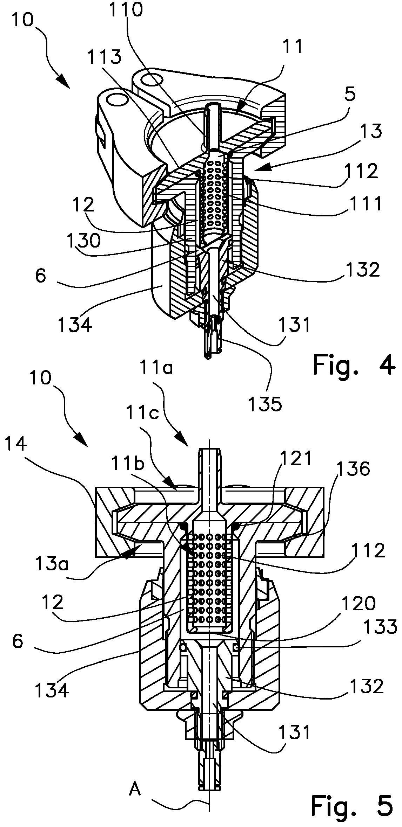

The cartridge 111 can form an open base (see in particular Figure 5) and in this case the inner chamber 5 is in any case delimited by the elastic body 12 in a rest condition, as described in detail below.

The locking portion 11c may further form a hooking element 113, for example a flange, for attaching to the casing 13, as described in detail below. For example, the hooking element 113 may extend between the connecting portion 11a and the containing portion 11b, transversely to the longitudinal axis A.

The elastic body 12 is made of a membrane 120 of elastic material, for example of elastomer, shaped like a sleeve or sheath, to cover the cartridge 111. The elastic body 12 is then fitted externally to the cartridge 111, so as to engage its external surface. In particular, the elastic body 12 usefully covers the cartridge 111 at the openings 112.

In particular, said elastomer is a rubbery polymer with bonds capable of strengthening its structure by improving the mechanical performance of the polymer itself and giving the polymer elastic properties similar to those of natural rubbers. In particular, the elastomer is capable of undergoing very wide elastic deformations.

Thanks to its intrinsic elastic properties, the elastic body 12 performs a function of pumping the fluid to be dosed, being extendable between a first condition, of rest with respect to the measurement operation, in which it is arranged adherently against the external surface of the cartridge 111, and a second, expanded condition, in which it is pushed by the fluid to adhere to the inner wall of the casing 13, as described in detail below, to contain a measured volume V_{DOS} of fluid, external to the previously mentioned clearance volume.

The elastic body 12 further forms an annular portion or peripheral rim 121, at a respective insertion mouth, intended to act as a seal and to be retained between the central body 11 and the casing 13 in an assembled condition.

The casing 13 can form a preferably cylindrical cup 130, adapted to be inserted, in the assembled state, externally to the cartridge 111, with the interposed elastic body 12.

Between the cup 130 of the casing 13 and the elastic body 12 in the first rest condition an external chamber 6 is therefore defined, containing a measuring volume V_{DOS}, substantially given by the difference between the total volume inside the cup 130 and the aforementioned clearance volume V_{N}. In practice, said measuring volume V_{DOS} corresponds to the volume occupied by the fluid to be measured, which, in a feeding step through the connection portion 11a, passes through the openings 112 of the cartridge 111, until the elastic body 12 expands in the second, expanded state, attached to the inner wall of the cup 130.

At a wall of the cup 130 a duct 131 is preferably obtained for injecting a contrast fluid, for example air and/or nitrogen, so as to adjust the pressure acting on the outer wall of the elastic body 12. For example, it is possible to provide that the duct 131 is made at a bottom 132 of the cup 130.

The bottom 132 can in turn be separated from the rest of the cup 130, being movable, for example, axially sliding inside the cup 130 with the interposition of corresponding sealing means 133, so as to be able to adjust, in particular micro-adjust, the measuring volume V_{DOS}. To allow such adjustment, the movable bottom 132 can be carried by a sleeve 134, inserted externally to the cup 131.

Guide means, for example of the threaded type, may be provided on corresponding facing surfaces of the sleeve 134 and of the cup 130 to guide an axial adjustment motion. For example, the sleeve 134 may be actuated manually or by suitable actuation means, such as a servomotor or other similar means.

The same casing 13 may have a fitting 135, applied for example to the base of the sleeve 134, if provided, or directly to the aforementioned bottom 132, as a continuation of the duct 131, to enable connection to a pressurizing duct adapted to feed the contrast fluid to the expansion of the elastic body 12. The fitting is therefore mounted in communication with the duct 131 which flows into the external measuring chamber 6 and which preferably protrudes externally to the sleeve 134 where it can be joined to the fitting 135 by means of suitable coupling means.

The casing 13 may finally comprise a fixing portion 13a, usefully conjugated to the locking portion 11c of the central body 11. For example, the fixing portion 13a may form a flanged element 136, intended to make the fixing to the central body 11 by coupling to the corresponding hooking element 113. The fixing portion 13a is preferably shaped at one end of the casing 13, developing for example transversely to the longitudinal axis A.

The measuring device 10 may further comprise a fixing member 14, for example of the clamp or jaw type, adapted to peripherally engage and lock together the locking portion 11c of the central body 11 with the fixing portion 13a of the casing 13.

It is important to note that the casing 13 is not subject to contact with the fluid to be measured, as this is contained, in operation, within the elastic body 12. Therefore, in choosing the material for its manufacturing it is possible to neglect contact with such a fluid.

The operation of the measuring device according to the invention is understandable from the foregoing description.

In an initial phase the fluid to be measured is fed in a controlled manner to the tank 2 and maintained at the containment pressure P₁.

The elastic body 12 of the measuring device 10 is initially arranged in the first, rest condition. In particular, in this circumstance the contrast fluid fed to the external chamber 6 and present between the casing 13 and the cartridge 112 is maintained at a pressure P₂, lower than the containment pressure P₁.

In the next feeding step, the opening of the first shut-off device 42 present on the suction duct 40 is controlled or in any case actuated. The fluid to be measured is then fed at pressure P₁ along the suction duct 40 to the internal chamber 5 of the measuring device 10. The pressure difference P₁-P₂ between the fluid in the inner chamber 5 and the contrast fluid in the outer chamber 6 makes the fluid to be measured flow through the openings 112 and acts on the elastic body 12 determining its elastic expansion up to the second, expanded condition, i.e. up to its adhesion to the inner wall of the cup 130.

In this phase, an amount of fluid corresponding to the measuring volume V_{DOS} defined by the external chamber 6 is collected, then measured, externally to the containment portion 11b.

The first shut-off device 42 is then closed and the second shut-off device 41 is opened.

A spring back effect acting on the elastic body 12, possibly with the aid of a pressurizing action exerted by the contrast fluid, air or nitrogen for example, fed through the duct 131, pushes the V_{DOS} of fluid to be measured to flow back through the openings 112 and brings the elastic body 12 back to the first rest condition. The measuring volume V_{DOS} is thus pushed towards the delivery duct 41 to the dispensing unit 3.

The V_{DOS} volume that may be measured by the described measuring system may preferably be in a range between 0.2 ml and more than 1 liter for each measuring cycle.

The described measuring system may be operated manually but may also be associated with semi-automatic or automatic machines for measuring fluids.

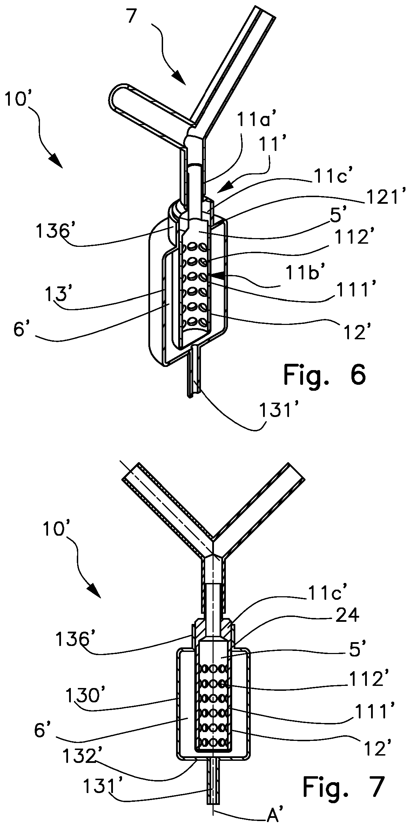

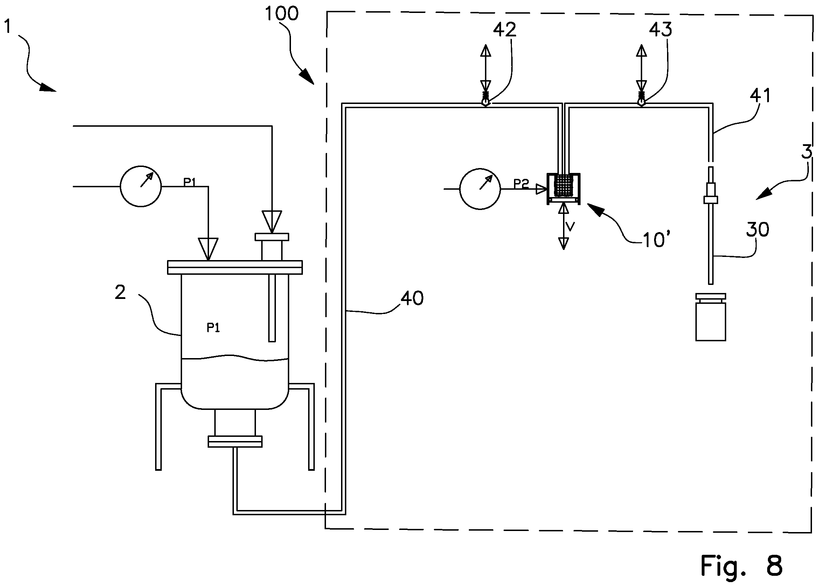

In a second embodiment shown in Figures 6, 7 and 8 by way of an example, the measuring device 10' may be used in a disposable manner. This embodiment is useful, in particular, for the measurement of dangerous fluids or which require particular sterility conditions, as it allows to avoid onerous and complicated washing operations.

In particular, the measuring device 10' may be provided as a disposable measuring kit 100, together with the necessary flexible tubing and fittings connecting to the suction and delivery of a circuit comprising an automatic or semi-automatic machine for measuring fluids.

Said tubing is preferably made of silicone material.

As aforesaid, the measuring device 10' comprises the central body 11', the elastic body 12' and the casing 13'.

More precisely, the central body 11' forms the attachment portion 11a', for connection to the suction duct 40 and delivery duct 41, for example by interposing a Y-shaped connecting member 7, as well as the containment portion 11b' and the locking portion 11c'.

The containment portion 11b' in turn shapes the cartridge 111' with the openings 112'.

Unlike the first shown embodiment, the elastic body 12' is made integral with the cartridge 111' at the peripheral rim 121', remaining for the rest expandable between the first state and the second state, as hereinbefore described.

The casing 13' is made by the cup 130', wherein the bottom 132' is fixedly integrated. The duct 131' for the pressurization of the external chamber 6' is also made integrated, protruding from the cup 130', preferably from the bottom 132'.

The same cup 130' flows into the fixing portion 13a' of the casing 13', which can advantageously be made in the form of a narrowing 136', suitable for the preferably adjustable insertion of the cartridge 111'. In particular, the corresponding locking portion 11c' of the central body 11' forms a shape section suitable for stable coupling with the narrowing 136'. In practice, the cartridge 111' can be inserted inside the casing 13' through the constriction 136', to be stably positioned there thanks to a corresponding generation of friction.

The cartridge 111' can be adjustably inserted inside the casing 13', along the longitudinal axis A', so as to correspondingly adjust the measuring volume contained in the outer chamber 6'.

The casing 13' can be advantageously made of plastic material, so as to permit a "disposable" use.

In particular, this solution makes it possible to provide the aforementioned kit 100, possibly integrated with the necessary tubing and packaged in a special previously sterilized package, for example by gamma rays or in another useful way. The aforementioned packaging is so made ready for use, by simply opening and installing it in a protected environment.

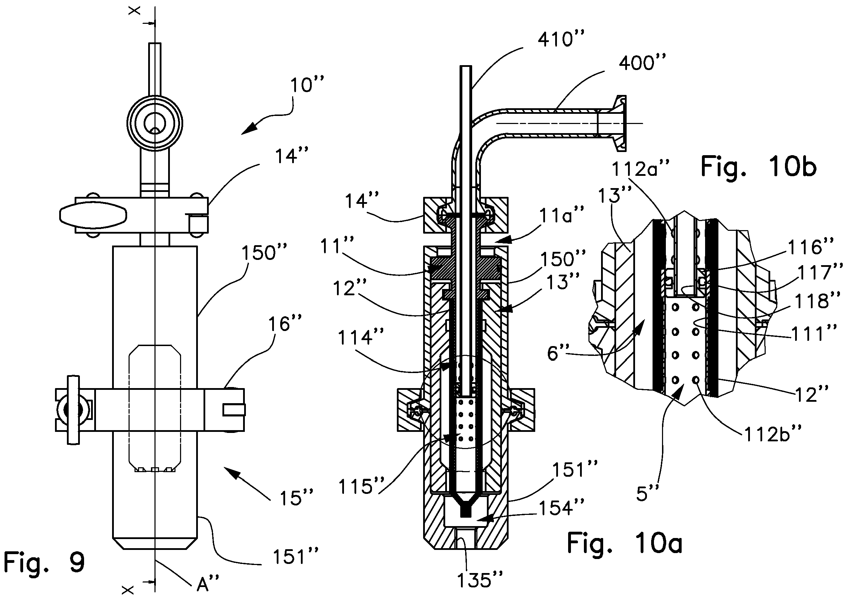

According to a third embodiment, illustrated in Figures 9 to 13, the measuring device 10" has technical characteristics, illustrated thereafter, which are also autonomous aspects, applicable and protectable separately from, and also in combination with each of the characteristics shown for the previous embodiments.

One of the aspects that distinguishes the third embodiment from the previous ones concerns the fact that the containing portion 11b" of the central body 11", which defines therein said clearance volume V_{N}, is advantageously divided into a suction section 114" and a delivery section 115".

The suction section 114" and the delivery section 115" are therefore separated from each other, so that the fluid to be measured cannot flow from one section to the other directly.

For this purpose, the suction section 114" and the delivery section 115" are preferably separated by an intermediate septum 116", inserted inside the inner chamber 5" preferably by interposing sealing means 117".

The suction section 114" is provided with respective suction openings 112a", which allow the passage of the fluid to be dispensed between the inner chamber 5" and the outside of the containment body 11b" following the expansion of the elastic body 12".

The delivery section 115" is provided with respective delivery openings 112b", adapted to allow the return of the fluid to be delivered from the outside of the containment body 11b" to the internal chamber 5" following the return of the elastic body 12" to the rest condition.

The connection portion 11a" of the central body 11" can provide for connection by means of special attachment means to a suction fitting 400" and to a delivery fitting 410".

In particular, the connection portion 11a" may define an internal channel, defined by the preferably axial coupling 110", flowing into the internal chamber 5" enclosed by the containment portion 11b", on which the suction fitting 400" and the delivery fitting 410" may be separately coupled, as described thereafter. This feature allows this channel to be divided into separate passages, i.e. arranged separately in communication with the suction section 114" and with the delivery section 115" of the inner chamber 5" enclosed by the containment portion 11b".

The measuring device 10" may for example comprise said fixing member 14", for example of the clamp or jaw type, suitable for peripherally engaging and locking together the locking portion 11c" of the central body 11" with a respective suitably flanged portion of the suction fitting 400".

The suction fitting 400"and the delivery fitting 410" have a tubular shape. They preferably also have a development and a shape such that they can be inserted into each other so as to be able to access, separately, the channel defined by the connection portion 11a" of the central body 11".

For example, the suction fitting 400" may provide at least one straight section which, in the condition in which it is connected to the locking portion 11c", is oriented according to the longitudinal development of the central body 11".

The delivery fitting 410" may have at least in part straight development and shape a cross-section such as to be able to occupy only partially the channel defined by the connection portion 11a" and the inner chamber 5" of the containment portion 11b".

The delivery fitting 410", for example, may be inserted axially into the straight section of the suction fitting 400", and then pass through the suction section 114" and the separation septum 116" between the suction section 114" and the delivery section 115", so as to be directly in communication with the delivery section 115" only.

The delivery fitting 410" may in any case directly connect the delivery duct 41 with the delivery section 115" of the containment portion 11b" of the central body 11", while the suction fitting 400" may directly connect the suction duct 40 to the suction section 114".

More precisely, the septum 116" may usefully comprise a hole 118" which allows the sealing engagement of the delivery fitting 410".

In the embodiment illustrated in Figures 9 to 13, the suction section 114" is arranged adjacent to the connection portion 11a", while the delivery section 115" is arranged along the longitudinal axis A", opposite to the connection portion 11a", beyond said septum 116".

Alternatively, it is possible to provide that the arrangement of the suction and delivery sections is reversed or different, but that in any case they are connected separately and respectively to the suction fitting 400" and to the delivery fitting 410".

According to a further independent aspect, applicable to measuring devices of different types, the measuring device 10" can further provide a valve element 44", movable alternatively between an open state, at which the valve element 44" is distant from the suction openings 112a", to allow the passage of fluid from the suction section 114" to the outside of the containment portion 11b", in a suction step, and a closed state, at which it is moved towards the same openings, so as to close them, to allow the passage of the V_{DOS} measuring volume of fluid sucked in and collected outside the containment portion 11b", in a delivery step, only through the delivery openings 112b".

The valve element 44" thus acts as a non-return valve, as it alternately opens the passage to the fluid to be sucked and closes the same passage in the delivery phase, to prevent the sucked fluid, collected externally to the cartridge 111", from returning towards the suction fitting 400.

The valve element 44" can therefore usefully cooperate with the first shut-off device 42 arranged on the suction duct 40, acting in a concordant manner, in the relative open and closed phases.

More generally, the valve element 44" is advantageous in the transitory, open and closed phases of the shut-off devices 42, 43, present on the supply and distribution circuits, the suction circuit 40 and the delivery circuit 41, of the fluid to be measured.

The valve element 44" is preferably positioned so as to alternately engage the suction openings 112a".

In addition, the valve element 44" is made of a material impermeable to the fluid to be measured.

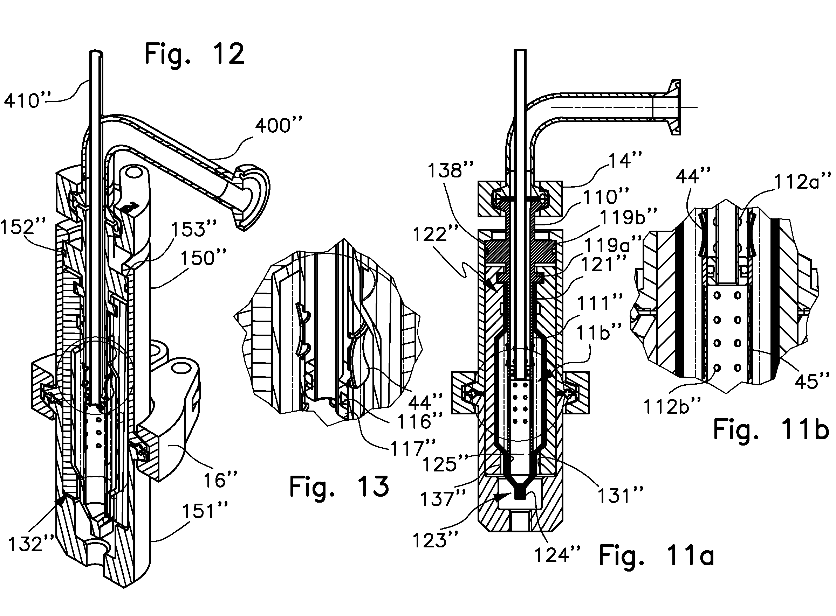

Advantageously, the valve element 44" may be formed of an elastic material, so as to be elastically deformed by the fluid-dynamic action of the flow of pressurized fluid, in the suction phase, at least locally freeing the suction openings 112a" (see in particular Figures 13, 11a and 11b).

In the delivery phase, however, the valve element 44", in the absence of fluid dynamic stress from the fluid coming from the suction duct 40, can return to a rest condition, engaging the suction openings 112a", until they are occluded.

The valve element 44" may preferably be made of an elastic band, in particular annular, fitted around the cartridge 111" at the suction openings 112a".

In practice, in the open state the valve element 44" may assume an expanded state, in which the respective zones facing the suction openings 112a" are lifted by the cartridge 111", freeing the passage to the fluid coming from the suction section 114" of the inner chamber 5".

In the closed state the same valve element 44" may also assume a retracted state, in which it is attached to the cartridge 111", thus blocking the passage of fluid through the suction openings 112a".

In the described embodiment, for example, the suction openings 112a" are arranged on two rows transverse to the longitudinal axis A", one after the other longitudinally, each being distributed radially around the axis of the containment portion 11b". In this case the valve element 44" covers, in said closed state, both the rows of suction openings 112a" and an intermediate zone therebetween. In the open state, on the other hand, the valve element 44" has respective annular, opposite edges, raised by the suction openings 112a". Lifting said edges causes an open passage to the outside of the cartridge 111". In the same configuration, the element 44' is arranged according to a convex state towards the outer chamber 6", i.e. towards the environment external to the cartridge 111", while an intermediate annular portion remains attached to said intermediate zone, free of openings, next to the cartridge 111" (see Figure 11b).

According to a still further independent aspect, applicable to measuring devices of different type, the measuring device 10" may also comprise a filtering element 45", preferably arranged at the delivery openings 112b", to precisely regulate the flow rate of the fluid to be measured.

In particular, the filter element 45" produces a pressure drop in the fluid flow passing through the delivery openings 112b" towards the delivery duct 41, so as to precisely control the flow rate of the fluid conveyed towards the delivery duct 41. In particular, the filter element 45" may counterbalance with optimal precision the contrasting action exerted by the contrasting fluid that can act on the elastic body 12".

The filter element 45" may be made for example from a tubular band, suitably fitted onto the cartridge 111", in particular to cover the delivery openings 112b", to filter the fluid flow collected outside the cartridge 111 " to delivery section 115".

Therefore, the filter element 45" is made of a material that is at least partially permeable to the fluid to be measured, for example of a material in the shape of a net.

According to a further aspect, which may be independent, applicable to measuring devices of different types, the elastic body 12" has an open end 122", for example at the top of the measuring member 10", suitable for being retained on the central body 11" at the aforementioned annular portion 121', and an opposite closed end 123", for example at the base of the measuring member 10" itself (see Figure 11a).

The elastic body 12" is preferably made of a tubular element, in which the closed end 123" has a joint 124".

This joint is preferably made by a welded end edge.

A further autonomous aspect, also applicable to measuring devices of other types, concerns the fact that the elastic body 12" is assembled inside the casing 13", in such a way as to be retained on the external wall of the containment portion 11b", as well as at the annular portion 121", also at a second annular portion 125", for example close to the closed end 123". In this way the expansion of the elastic body 12" is advantageously segregated between the annular portion 121" and the second annular portion 125", enabling the definition of the measuring volume V_{DOS} in a very precise way.

For this purpose, the elastic body 12" can be inserted inside the duct 131" for feeding the contrast fluid, obtained in the casing 13", being so retained by the respective internal wall in the expansion phase.

The duct 131" may in turn comprise internal grooves 137" which extend from the inlet of the conduit 131" itself up to facing the external chamber 6", to allow the inflow and outflow of the contrast fluid to and/or from the chamber 6".

The grooves 137" may be made, for example, in the shape of knurls.

The casing 13" may be made in several parts, preferably in a pair of half-parts, enabling the correct clamping of the elastic body 12" between the central body 11" and the casing itself. For example, the aforementioned half-parts can be made in the form of respective half-shells separated along a median plane containing the longitudinal axis A".

To this end, the central body 11" may comprise a first collar 119a" (see Figure 11a). Correspondingly, each half part of the casing 13" may comprise a respective annular seat 138" adapted to receive the first collar 119a", to center the assembly of the central body 12" and correctly tighten the elastic body 12", at the annular portion 121" and the second annular portion 125".

For example, the measuring device 10" may further include a shell 15" assembled externally to the casing 13", in order to lock, in turn, the respective half-parts of the latter.

The shell 15" is preferably made of a pair of half-shells, a first half-shell 150" and a second half-shell 151". For example, the first half-shell 150" and the second half-shell 151" may be joined at a median plane transverse to the longitudinal axis A".

The first half-shell 150" and the second half-shell 151" can be fixed by locking means 16", for example of the clamp type. In this case it is useful that the half-shells 150", 151" suitably provide a flange-shaped portion, adapted to be engaged by the locking means 16" (see Figures 9 and 13).

The first half-shell 150" may stably enclose the casing 13" and, at least partially, the connecting portion 11a" of the central body 11", for example by interposing sealing means 152" (see Figure 12).

To allow correct interlocking, the central body 11" may further comprise a second collar 119b" and correspondingly the first half-shell 150" can provide a respective stop 153", adapted to stably receive the second collar 119b" (see Figure 12).

The second half-shell 151" may instead enclose the bottom of the casing 13" where the duct 131" is made.

The same half-shell 151" may form a fitting opening 135" for connection to the contrast fluid supply circuit.

Preferably the second half-shell 151" is formed around the bottom 132" of the casing 13", so as to define outside thereof an inlet chamber 154" for the contrast fluid, which develops between the conduit 131" and the connection opening 135" and which can receive the contrast fluid.

The operation of the measuring device according to the third embodiment is similar to that already described.

In particular, in the feeding step, the opening of the first shut-off device 42 present on the suction duct 40 is controlled or, in any case, actuated. The fluid to be measured is then fed at pressure P₁ along the suction duct 40 to the internal chamber 5" of the measuring device 10", reaching the suction section 114" through the suction fitting 400".

The pressure difference P₁-P₂ between the fluid in the inner chamber 5" and the contrast fluid in the outer chamber 6" opens the valve element 44", makes the fluid to be measured flow through the suction openings 112a" and acts on the elastic body 12" determining its elastic expansion up to the second, expanded state, that is up to its adhesion to the inner wall of the casing 13".

In this phase, an amount of fluid corresponding to the measuring volume V_{DOS} defined by the external chamber 6" is collected, then measured, externally to the containment portion 11b".

The first shut-off device 42 is then closed and the second shut-off device 41 is opened.

A spring back effect acting on the elastic body 12", possibly with the aid of a pressurizing action exerted by the contrast fluid, air or nitrogen for example, fed through the connection opening 135" and the duct 131", pushes the V_{DOS} of fluid to be measured to flow through the delivery openings 112b" in the delivery section 115" and brings the elastic body 12" back to the first rest condition. The measuring volume V_{DOS} is thus pushed towards the delivery duct 41, through the delivery fitting 410", to the delivery unit 3. The thrust of the fluid outflow is advantageously regulated thanks to the presence of the filter element 45" fitted to cover the delivery openings 112b".

The measuring device described by way of example is susceptible to numerous modifications and variations depending on the different needs.

In the practical embodiment of the invention, the materials used, as well as the shape and the dimensions, may be modified depending on needs.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. A measuring device for a fluid to be measured, comprising a central body (11, 11', 11") equipped with a connection portion (11a, 11a', 11a") for connection to at least one suction duct (40) and to at least one delivery duct (41) of said fluid, and with a containment portion (11b, 11b', 11b") which defines an internal cavity (5, 5") for a clearance volume (V_{N}) of said fluid and comprises a plurality of openings (112, 112', 112a", 112b") for the passage of said fluid outside said containment portion (11b, 11b', 11b"), a casing ( 13, 13', 13") mounted externally to said containment portion (11b, 11b', 11b") so as to define between said casing (13, 13', 13") and said containment portion (11b , 11b', 11b") an external chamber (6, 6") suitable for containing a measuring volume (V_{DOS}) of said fluid, and an elastic body (12, 12', 12") fitted externally to said containment portion (11b, 11b', 11b") and retained by an annular portion (121, 121', 121") between said central body (11, 11', 11") and said casing (13, 13', 13"), said elastic body (12, 12', 12") being expandable between a first rest condition, in which said elastic body (12, 12', 12") adheres to said containment portion (11b, 11b', 11b") and a second, expanded condition, at which said elastic body (12, 12', 12") is expanded until it occupies said measuring volume (V_{DOS}) of said outer chamber (6"), due to a flow of said fluid through said openings (112, 112', 112a", 112b"), **characterized by** said casing (13, 13', 13") having a duct ( 131, 131', 131") for feeding a fluid which contrasts the expansion of said elastic body (12, 12', 12").

2. The measuring device of claim 1, wherein said elastic body (12, 12', 12") is made of elastomer.

3. The measuring device of claim 1 or 2, wherein said containment portion (11b, 11b', 11b") forms a tubular cartridge (111, 111', 111"), which can be inserted inside said casing (13, 13') and is perforated or made up of a mesh.

4. The measuring device of any one of the preceding claims, wherein said connection portion (11a, 11a', 11a") includes a coupling (110, 110', 110") for the entry and/or exit of the fluid to be measured.

5. The measuring device of any one of the preceding claims, wherein said central body (11, 11') and said casing (13, 13') are mutually fixed at a locking portion (11c, 11c') and a fixing portion (13a, 13a') respectively.

6. The device of claim 5, wherein said locking portion (11c, 11c ') and said fixing portion (13a, 13a') are flange-shaped.

7. The measuring device of claim 5, wherein said locking portion (11c, 11c') and said fixing portion (13a, 13a') are inserted into each other with generation of friction, for mutual fixing.

8. The measuring device of any one of the preceding claims, wherein said duct (131, 131', 131") is made on a bottom (132, 132', 132") of said casing (13, 13', 13").

9. The measuring device of claim 8, wherein said bottom (132) is made as a component separated from said casing (13, 13') and movably mounted thereto, so as to adjust said measuring volume (V_{DOS}).

10. The measuring device of any one of the preceding claims, wherein said casing (13') is made of plastic material.

11. The measuring device of any one of the preceding claims, wherein said containment portion (11b") is divided into a suction section (114") and a delivery section (115"), so that said fluid to be measured cannot flow from one section to the other directly.

12. The measuring device of claim 11, wherein said suction section (114") and said delivery section (115") are separated by an intermediate section (116"), inserted inside said internal chamber (5").

13. The measuring device of claim 12, wherein said suction section (114") is equipped with respective suction openings (112a"), adapted to allow the passage of the fluid to be dispensed from said internal chamber (5") outside said containment body (11b") following the expansion of said elastic body (12"), and said delivery section (115") is equipped with respective delivery openings (112b"), suitable for allowing the return of said fluid to be delivered from the outside of said containment body (11b") to said internal chamber (5") following the return of said elastic body (12") to said rest condition.

14. The measuring device of claim 13, wherein it comprises a valve element (44"), movable alternately between an open state, at which it is spaced from said suction openings (112a"), to allow the passage of fluid from said suction section (114") to the outside of said containment portion (11b"), in a suction phase, and a closed state, at which said valve element (44") is close to said suction openings (112a"), so as to block them, to allow the passage of said measuring volume (V_{DOS}) of sucked fluid and collected outside said containment portion (11b"), in a delivery phase, through said delivery openings only (112b").

15. The measuring device of claim 14, wherein said valve element (44") is made of elastic material, impermeable to the fluid to be measured.

16. The measuring device of any one of the preceding claims, wherein it comprises a filter element (45"), for precisely adjusting the flow rate of the fluid to be measured.

17. The measuring device of claims 13 and 16, wherein said filter element (45") is arranged at said delivery openings (112b").

18. The measuring device of claim 16 or 17, wherein said filter element (45") is a tubular band of mesh material.

19. The measuring device of any one of the preceding claims, wherein said elastic body (12") is made of a tubular element, having an end (123") closed by a joint (124").

20. The measuring device of claim 19, wherein said joint (124") is made of a welded end edge.

21. The measuring device of any one of the preceding claims, wherein said elastic body (12") is assembled inside the casing (13"), so that it is retained on the external wall of said containment portion (11b"), as well as at said annular portion (121"), also at a second annular portion (125"), so as to segregate the expansion of said elastic body (12") between said annular portion (121") and said second annular portion (125"), to define said measuring volume (V_{DOS}).

22. The measuring device of claim 21, wherein said elastic body (12") is inserted inside said duct (131") for feeding said contrast fluid, thus being held by a respective internal wall in an expansion phase, said duct (131") being provided with internal grooves (137") to allow the inflow and/or outflow of said contrast fluid to and/or from said external chamber 6" and the external of said casing (13").

## Patentansprüche

1. Messvorrichtung für ein zu messendes Fluid, die einen Zentralkörper (11, 11', 11") umfasst, der mit einem Verbindungsabschnitt (11a, 11a', 11a") zur Verbindung mit mindestens einem Ansaugkanal (40) und mit mindestens einem Abgabekanal (41) des Fluids ausgestattet ist, und mit einem Einschlussabschnitt (11b, 11b', 11b"), der einen inneren Hohlraum (5, 5") für ein Freiraumvolumen (V_{N}) des Fluids definiert und eine Vielzahl von Öffnungen (112, 112', 112a", 112b") für den Durchgang des Fluids außerhalb des Einschlussabschnitts (11b, 11b', 11b") umfasst, ein Gehäuse (13, 13', 13"), das außen an dem Einschlussabschnitt (11b, 11b', 11b") angebaut ist, um zwischen dem Gehäuse (13, 13', 13") und dem Einschlussabschnitt (11b, 11b', 11b") eine externe Kammer (6, 6") zu definieren, die zum Aufnehmen eines Messvolumens (V_{DOS}) des Fluids geeignet ist, und einen elastischen Körper (12, 12', 12"), der außen an den Einschlussabschnitt (11b, 11b', 11b") gepasst ist und von einem ringförmigen Abschnitt (121, 121', 121") zwischen dem zentralen Körper (11, 11', 11") und dem Gehäuse (13, 13', 13") gehalten wird, wobei der elastische Körper (12, 12', 12") zwischen einem ersten Ruhezustand, in dem der elastische Körper (12, 12', 12") an dem Einschlussabschnitt (11b, 11b', 11b") haftet, und einem zweiten, expandierten Zustand, in dem der elastische Körper (12, 12', 12") expandiert wird, bis er das Messvolumen (V_{DOS}) der äußeren Kammer (6") einnimmt, aufgrund eines Flusses des Fluids durch die Öffnungen (112, 112', 112a", 112b") expandierbar ist, **dadurch gekennzeichnet, dass** das Gehäuse (13, 13', 13") einen Kanal (131, 131', 131") zum Zuführen eines Fluids aufweist, das der Expansion des elastischen Körpers (12, 12', 12") entgegenwirkt.

2. Messvorrichtung nach Anspruch 1, wobei der elastische Körper (12, 12', 12") aus Elastomer hergestellt ist.

3. Messvorrichtung nach Anspruch 1 oder 2, wobei der Einschlussabschnitt (11b, 11b', 11b") eine rohrförmige Kartusche (111, 111', 111") bildet, die in das Gehäuse (13, 13') eingesetzt werden kann und perforiert ist oder aus einem Netz besteht.

4. Messvorrichtung nach einem der vorstehenden Ansprüche, wobei der Verbindungsabschnitt (11a, 11a', 11a") eine Kopplung (110, 110', 110") für den Eintritt und/oder Austritt des zu messenden Fluids beinhaltet.

5. Messvorrichtung nach einem der vorstehenden Ansprüche, wobei der Zentralkörper (11, 11') und das Gehäuse (13, 13') aneinander an einem Verriegelungsabschnitt (11c, 11c') bzw. einem Befestigungsabschnitt (13a, 13a') befestigt sind.

6. Vorrichtung nach Anspruch 5, wobei der Verriegelungsabschnitt (11c, 11c') und der Befestigungsabschnitt (13a, 13a') flanschförmig sind.

7. Messvorrichtung nach Anspruch 5, wobei der Verriegelungsabschnitt (11c, 11c') und der Befestigungsabschnitt (13a, 13a') zur gegenseitigen Befestigung unter Erzeugung von Reibung ineinander eingesetzt sind.

8. Messvorrichtung nach einem der vorstehenden Ansprüche, wobei der Kanal (131, 131', 131") an einem Boden (132, 132', 132") des Gehäuses (13, 13', 13") hergestellt ist.

9. Messvorrichtung nach Anspruch 8, wobei der Boden (132) als von dem Gehäuse (13, 13') getrenntes und an diesem bewegbar angebautes Bauteil gebildet ist, um das Messvolumen (V_{DOS}) einzustellen.

10. Messvorrichtung nach einem der vorstehenden Ansprüche, wobei das Gehäuse (13') aus Kunststoffmaterial hergestellt ist.

11. Messvorrichtung nach einem der vorstehenden Ansprüche, wobei der Einschlussabschnitt (11b") in einen Ansaugabschnitt (114") und einen Abgabeabschnitt (115") derart unterteilt ist, dass das zu messende Fluid nicht direkt von einem Abschnitt zum anderen fließen kann.

12. Messvorrichtung nach Anspruch 11, wobei der Saugabschnitt (114") und der Abgabeabschnitt (115") durch einen Zwischenabschnitt (116"), der in die innere Kammer (5") eingesetzt ist, getrennt sind.

13. Messvorrichtung nach Anspruch 12, wobei der Ansaugabschnitt (114") mit entsprechenden Ansaugöffnungen (112a") ausgestattet ist, die dazu angepasst sind, den Durchgang des Fluids zu erlauben, das aus der inneren Kammer (5") außerhalb des Einschlusskörpers (11b") nach der Ausdehnung des elastischen Körpers (12") abgegeben werden soll, und der Abgabeabschnitt (115") mit entsprechenden Abgabeöffnungen (112b") ausgestattet ist, die dazu geeignet sind, die Rückführung des Fluids zu erlauben, das von der Außenseite des Einschlusskörpers (11b") in die innere Kammer (5") nach der Rückkehr des elastischen Körpers (12") in den Ruhezustand abgegeben werden soll.

14. Messvorrichtung nach Anspruch 13, wobei sie ein Ventilelement (44") umfasst, das abwechselnd zwischen einem offenen Zustand, in dem es von den Ansaugöffnungen (112a") beabstandet ist, um den Durchgang von Fluid von dem Ansaugabschnitt (114") zu der Außenseite des Einschlussabschnitts (11b") in einer Ansaugphase zu erlauben, und einem geschlossenen Zustand, in dem sich das Ventilelement (44") in der Nähe der Ansaugöffnungen (112a") befindet, um sie zu blockieren, um den Durchgang des Messvolumens (V_{DOS}) von angesaugtem Fluid, das außerhalb des Einschlussabschnitts (11b") gesammelt wurde, in einer Abgabephase nur durch die Abgabeöffnungen (112b") zu erlauben, bewegbar ist.

15. Messvorrichtung nach Anspruch 14, wobei das Ventilelement (44") aus einem elastischen Material hergestellt ist, das für das zu messende Fluid undurchlässig ist.

16. Messvorrichtung nach einem der vorstehenden Ansprüche, wobei sie ein Filterelement (45") zum genauen Einstellen der Durchflussrate des zu messenden Fluids umfasst.

17. Messvorrichtung nach Anspruch 13 und 16, wobei das Filterelement (45") an den Abgabeöffnungen (112b") eingerichtet ist.

18. Messvorrichtung nach Anspruch 16 oder 17, wobei das Filterelement (45") ein rohrförmiges Band aus Netzmaterial ist.

19. Messvorrichtung nach einem der vorstehenden Ansprüche, wobei der elastische Körper (12") aus einem rohrförmigen Element hergestellt ist, das ein Ende (123") aufweist, das durch eine Stoßstelle (124") verschlossen ist.

20. Messvorrichtung nach Anspruch 19, wobei die Stoßstelle (124") aus einer geschweißten Endkante besteht.

21. Messvorrichtung nach einem der vorstehenden Ansprüche, wobei der elastische Körper (12") innerhalb des Gehäuses (13") derart zusammengebaut ist, dass er an der Außenwand des Einschlussabschnitts (11b") sowie an dem ringförmigen Abschnitt (121"), auch an einem zweiten ringförmigen Abschnitt (125"), gehalten wird, um die Ausdehnung des elastischen Körpers (12") zwischen dem ringförmigen Abschnitt (121") und dem zweiten ringförmigen Abschnitt (125") zu trennen, um das Messvolumen (V_{DOS}) zu definieren.

22. Messvorrichtung nach Anspruch 21, wobei der elastische Körper (12") in den Kanal (131") zum Zuführen des Kontrastfluids eingesetzt ist und daher durch eine jeweilige Innenwand in einer Expansionsphase gehalten wird, wobei der Kanal (131") mit Innennuten (137") versehen ist, um den Zufluss und/oder Abfluss des Kontrastfluids zu und/oder von der Außenkammer 6" und dem Äußeren des Gehäuses (13") zu erlauben.

## Revendications

1. Dispositif de mesure pour un fluide à mesurer, comprenant un corps central (11, 11', 11") équipé d'une partie de raccordement (11a, 11a', 11a") pour le raccordement à au moins un conduit d'aspiration (40) et à au moins un conduit de distribution (41) dudit fluide, et d'une partie de limitation (11b, 11b', 11b") qui définit une cavité interne (5, 5") pour un volume de dégagement (V_{N}) dudit fluide et comprend une pluralité d'ouvertures (112, 112', 112a", 112b") pour le passage dudit fluide à l'extérieur de ladite partie de limitation (11b, 11b', 11b"), un boîtier (13, 13', 13") monté à l'extérieur de ladite partie de limitation (11b, 11b', 11b") de manière à définir entre ledit boîtier (13, 13', 13") et ladite partie de limitation (11b, 11b', 11b'') une chambre externe (6, 6") adaptée pour contenir un volume de mesure (V_{DOS}) dudit fluide, et un corps élastique (12, 12', 12") ajusté à l'extérieur de ladite partie de limitation (11b, 11b', 11b") et retenu par une partie annulaire (121, 121', 121") entre ledit corps central (11, 11', 11") et ledit boîtier (13, 13', 13"), ledit corps élastique (12, 12', 12") étant expansible entre un premier état de repos, dans lequel ledit corps élastique (12, 12', 12") adhère à ladite partie de limitation (11b, 11b', 11b") et un second état expansé, dans lequel ledit corps élastique (12, 12', 12") est expansé jusqu'à ce qu'il occupe ledit volume de mesure (V_{DOS}) de ladite chambre extérieure (6"), en raison d'un écoulement dudit fluide à travers lesdites ouvertures (112, 112', 112a", 112b"), **caractérisé par** ledit boîtier (13, 13', 13") disposant d'un conduit (131, 131', 131") pour acheminer un fluide qui contraste l'expansion dudit corps élastique (12, 12', 12").

2. Dispositif de mesure selon la revendication 1, dans lequel ledit corps élastique (12, 12', 12") est constitué d'élastomère.

3. Dispositif de mesure selon la revendication 1 ou 2, dans lequel ladite partie de limitation (11b, 11b', 11b") forme une cartouche tubulaire (111, 111', 111"), qui peut être insérée à l'intérieur dudit boîtier (13, 13') et est perforée ou constituée d'une maille.

4. Dispositif de mesure selon l'une quelconque des revendications précédentes, dans lequel ladite partie de raccordement (11a, 11a', 11a") comprend un accouplement (110, 110', 110") pour l'entrée et/ou la sortie du fluide à mesurer.

5. Dispositif de mesure selon l'une quelconque des revendications précédentes, dans lequel ledit corps central (11, 11') et ledit boîtier (13, 13') sont mutuellement fixés au niveau d'une partie de verrouillage (11c, 11c') et d'une partie de fixation (13a, 13a') respectivement.

6. Dispositif selon la revendication 5, dans lequel ladite partie de verrouillage (11c, 11c') et ladite partie de fixation (13a, 13a') sont en forme de bride.

7. Dispositif de mesure selon la revendication 5, dans lequel ladite partie de verrouillage (11c, 11c') et ladite partie de fixation (13a, 13a') sont insérées l'une dans l'autre avec génération de frottement, pour une fixation mutuelle.

8. Dispositif de mesure selon l'une quelconque des revendications précédentes, dans lequel ledit conduit (131, 131', 131") est réalisé sur un fond (132, 132', 132") dudit boîtier (13, 13', 13").

9. Dispositif de mesure selon la revendication 8, dans lequel ledit fond (132) est réalisé sous la forme d'un composant séparé dudit boîtier (13, 13') et monté de manière mobile sur celui-ci, de manière à régler ledit volume de mesure (V_{DOS}).

10. Dispositif de mesure selon l'une des revendications précédentes, dans lequel ledit boîtier (13') est constitué d'un matériau plastique.

11. Dispositif de mesure selon l'une quelconque des revendications précédentes, dans lequel ladite partie de limitation (11b") est divisée en une section d'aspiration (114") et une section de distribution (115"), de sorte que ledit fluide à mesurer ne peut pas s'écouler d'une section à l'autre directement.

12. Dispositif de mesure selon la revendication 11, dans lequel ladite section d'aspiration (114") et ladite section de distribution (115") sont séparées par une section intermédiaire (116"), insérée à l'intérieur de ladite chambre interne (5").

13. Dispositif de mesure selon la revendication 12, dans lequel ladite section d'aspiration (114") est équipée d'ouvertures (112a") d'aspiration respectives, adaptées pour permettre le passage du fluide à distribuer à partir de ladite chambre interne (5") à l'extérieur dudit corps de limitation (11b") à la suite de l'expansion dudit corps élastique (12"), et ladite section de distribution (115") est équipée d'ouvertures (112b") de distribution respectives, appropriées pour permettre le retour dudit fluide à distribuer à partir de l'extérieur dudit corps de limitation (11b") à ladite chambre interne (5") à la suite du retour dudit corps élastique (12") à ladite condition de repos.

14. Dispositif de mesure selon la revendication 13, dans lequel il comprend un élément de soupape (44"), mobile alternativement entre un état ouvert, dans lequel il est espacé desdites ouvertures (112a") d'aspiration, pour permettre le passage du fluide de ladite section d'aspiration (114") à l'extérieur de ladite partie de limitation (11b"), dans une phase d'aspiration, et un état fermé, dans lequel ledit élément de soupape (44") est proche desdites ouvertures (112a") d'aspiration, de manière à les bloquer, pour permettre le passage dudit volume de mesure (V_{DOS}) du fluide aspiré et collecté à l'extérieur de ladite partie de limitation (11b"), dans une phase de distribution, à travers lesdites ouvertures (112b") de distribution uniquement.

15. Dispositif de mesure selon la revendication 14, dans lequel ledit élément de soupape (44") est constitué d'un matériau élastique, imperméable au fluide à mesurer.

16. Dispositif de mesure selon l'une quelconque des revendications précédentes, dans lequel il comprend un élément de filtre (45"), pour régler avec précision le débit du fluide à mesurer.

17. Dispositif de mesure selon les revendications 13 et 16, dans lequel ledit élément de filtre (45") est agencé au niveau desdites ouvertures (112b") de distribution.

18. Dispositif de mesure selon la revendication 16 ou 17, dans lequel ledit élément de filtre (45") est une bande tubulaire de matériau à mailles.

19. Dispositif de mesure selon l'une quelconque des revendications précédentes, dans lequel ledit corps élastique (12") est constitué d'un élément tubulaire, présentant une extrémité (123") fermée par un joint (124").

20. Dispositif de mesure selon la revendication 19, dans lequel ledit joint (124") est constitué d'un bord d'extrémité soudé.

21. Dispositif de mesure selon l'une quelconque des revendications précédentes, dans lequel ledit corps élastique (12") est assemblé à l'intérieur du boîtier (13"), de sorte qu'il est retenu sur la paroi externe de ladite partie de limitation (11b"), ainsi qu'au niveau de ladite partie annulaire (121"), également au niveau d'une seconde partie annulaire (125"), de manière à séparer l'expansion dudit corps élastique (12") entre ladite partie annulaire (121") et ladite seconde partie annulaire (125"), pour définir ledit volume de mesure (V_{DOS}).

22. Dispositif de mesure selon la revendication 21, dans lequel ledit corps élastique (12") est inséré à l'intérieur dudit conduit (131") pour acheminer ledit fluide de contraste, étant ainsi maintenu par une paroi interne respective dans une phase d'expansion, ledit conduit (131") étant pourvu de rainures internes (137") pour permettre l'entrée et/ou la sortie dudit fluide de contraste vers et/ou depuis ladite chambre externe (6") et l'extérieur dudit boîtier (13").
